# DEMANDE DE BREVET EUROPEEN

(11) **EP 1 482 512 A1**
(43) Date de publication de la demande: **01.12.2004**
(21) Numéro de dépôt: 04076504.2
(22) Date de dépôt: 24.05.2004
(51) Int. Cl.: G11B 33/12

(54) **Dispositif de maintien d'un dispositif d'écriture et/ou lecture monté dans un chassis d'ordinateur**

(30) Priorité: 28.05.2003 FR 0306543
(71) Demandeur: NEC Computers International B.V., 6603 BN Wijchen (NL)
(72) Inventeur: Tellier, Denis, 49000 Angers (FR); Guitton, Stevan, 49000 Angers (FR); Bondu, Gilles, 49000 Angers (FR)
(74) Mandataire: Maillet, Alain

(57) **Abrégé**

La présente invention concerne un dispositif de maintien (2) d'un dispositif d'écriture et/ou lecture (4) monté dans un châssis d'ordinateur (1).

Selon l'invention, ledit dispositif comporte au moins un moyen de maintien (60, 70) distinct du corps dudit châssis (1), ledit ou chaque moyen de maintien (60, 70) possédant des propriétés élastiques lui permettant d'exercer une force destinée à plaquer (F1, F2) ledit dispositif d'écriture et/ou lecture (4) contre au moins une surface de référence (30, 51, 31, 500a) tout en autorisant l'insertion et le retrait du dispositif d'écriture et/ou lecture (4) dudit châssis (1).

## Description

La présente invention concerne un dispositif de maintien, dans un châssis d'ordinateur, d'un dispositif d'écriture et/ou lecture tel qu'un dispositif de stockage de masse couramment appelé disque dur.

Plusieurs techniques permettent de maintenir un dispositif d'écriture et/ou lecture, tel qu'un lecteur de CD, un lecteur de disquettes ou un disque dur, dans un châssis d'ordinateur. Parmi ces techniques, la plus traditionnelle consiste à installer le dispositif d'écriture et/ou lecture contre une paroi prévue à cet effet à l'intérieur dudit châssis pour pouvoir fixer ledit dispositif d'écriture et/ou lecture en le vissant. La mise en place de vis et les difficultés rencontrées pour accéder au dispositif d'écriture et/ou lecture prouvent que le dispositif n'est pas prévu pour être retiré du châssis. Or, de manière courante, l'utilisateur rencontre le besoin de devoir ôter ce dispositif pour pouvoir par exemple le réinstaller sur un autre châssis, ce qui nécessite le démontage du châssis et du dispositif d'écriture et/ou lecture et par conséquent le retrait de vis de fixation. Cette technique est par conséquent inadaptée aux besoins actuels de l'utilisateur.

On connaît par ailleurs d'autres solutions dans lesquelles le dispositif d'écriture et/ou lecture est plus accessible. C'est le cas par exemple, de supports comportant des glissières et des plots. Sur les parois internes de ces supports prévus pour s'insérer dans un châssis d'ordinateur, des pattes sont découpées et repliées à angle droit. Entre ces pattes, le dispositif d'écriture et/ou lecture peut être inséré par coulissement et guidé par des plots également formés dans ces parois. Des vis sont ensuite rajoutées de manière à fixer le dispositif sur le support. Ces supports facilitent la mise en place du dispositif d'écriture et/ou lecture sur le châssis, mais ne permettent en aucun cas au dispositif d'écriture et/ou lecture d'être à la fois maintenu convenablement dans le châssis et retiré sans outil. En outre, un tel dispositif ne pourrait fonctionner sans la présence de vis. En effet, les moyens de maintien utilisés étant des pattes relativement peu élastiques, les déplacements répétés du dispositif d'écriture et/ou lecture dans le support provoqueraient des déformations persistantes de ces pattes. Un tel dispositif de maintien ne convient donc également pas.

On connaît encore des moyens permettant de maintenir le dispositif d'écriture et/ou lecture sans utiliser de vis de fixation et donc d'outil pour les ôter. C'est par exemple le cas du document US-A-6 469 890 qui décrit notamment un support de montage composé d'une plaque de forme et de dimensions adaptées à venir s'emboîter sur un disque dur. Cette plaque comporte un moyen élastique destiné à enserrer entre lui et ladite plaque une pièce attenante au châssis d'un ordinateur de manière à pincer ladite pièce et ainsi à maintenir le disque dur sur le châssis. Ce moyen de maintien ne permet pas de maintenir le disque dur de manière suffisamment stable de manière à éviter de lui faire subir un minimum de vibrations. En outre, la mise en place d'un tel moyen de maintien nécessite le démontage du châssis.

Le but de l'invention est donc de proposer un dispositif de maintien d'un dispositif d'écriture et/ou lecture en position stable dans un châssis d'ordinateur, ce dispositif d'écriture et/ou lecture pouvant être mis en place et ôté du châssis sans nécessiter l'utilisation d'outils.

A cet effet, la présente invention concerne un dispositif de maintien d'un dispositif d'écriture et/ou lecture monté dans un châssis d'ordinateur. Le dispositif se caractérise en ce qu'il comporte au moins un moyen de maintien distinct du corps dudit châssis, ledit ou chaque moyen de maintien possédant des propriétés élastiques lui permettant d'exercer une force destinée à plaquer ledit dispositif d'écriture et/ou lecture contre au moins une surface de référence tout en autorisant l'insertion et le retrait du dispositif d'écriture et/ou lecture dudit châssis.

Avantageusement, ledit ou chaque moyen de maintien est une lame souple.

Selon une autre caractéristique de l'invention, deux moyens de maintien sont prévus pour plaquer ledit dispositif d'écriture et/ou lecture contre une première surface de référence et un autre moyen de maintien est prévu pour plaquer ledit dispositif d'écriture et/ou lecture contre une seconde surface de référence.

Avantageusement, ladite première surface de référence est formée d'au moins un plot.

Avantageusement, ladite première surface de référence est formée par une paroi.

Avantageusement, ladite seconde surface de référence est formée par une paroi.

Selon une autre caractéristique de l'invention, ledit dispositif de maintien comporte un support pourvu d'ergots prévus pour limiter le mouvement de translation du dispositif d'écriture et/ou lecture dans la direction dans laquelle il est engagé dans ledit châssis.

Les caractéristiques de l'invention mentionnées ci-dessus, ainsi que d'autres apparaîtront plus clairement à la lecture de la description suivante d'exemples de réalisation, ladite description étant faite en relation avec les dessins joints, parmi lesquels :
la Fig. 1 représente le principe général de l'invention ;
la Fig. 2 représente une vue en perspective tronquée d'un châssis d'ordinateur comportant deux logements dans lesquels est installé le dispositif de maintien du dispositif d'écriture et/ou lecture selon l'invention ;
la Fig. 3a représente une vue de face d'un logement muni du dispositif de maintien selon l'invention ;
la Fig. 3b représente une vue de dessus d'un logement muni du dispositif de maintien selon l'invention ;
la Fig. 3c représente une vue en coupe selon le plan A-A de la Fig. 3b ;
la Fig. 4a représente une vue de face d'un dispositif d'écriture et/ou lecture monté dans le dispositif de maintien selon un premier mode de réalisation de l'invention ;
la Fig. 4b représente une vue de dessus d'un dispositif d'écriture et/ou lecture monté dans le dispositif de maintien selon un premier mode de réalisation de l' invention ;
la Fig. 4c représente une vue en coupe selon le plan B-B de la Fig. 4b;
la Fig. 5a représente une vue de face d'un dispositif d'écriture et/ou lecture monté dans un support prévu pour s'insérer dans un des logements du châssis d'ordinateur ;
la Fig. 5b représente une vue de dessus d'un dispositif d'écriture et/ou lecture monté sur un support prévu pour s'insérer dans un des logements du châssis d'ordinateur ;
la Fig. 6a représente une vue de face d'un dispositif d'écriture et/ou lecture monté dans le dispositif de maintien selon un second mode de réalisation de l'invention ;
la Fig. 6b représente une vue de dessus d'un dispositif d'écriture et/ou lecture monté dans le dispositif de maintien selon un second mode de réalisation de l'invention ; et
la Fig. 6c représente une vue en coupe selon le plan C-C de la Fig. 4b.

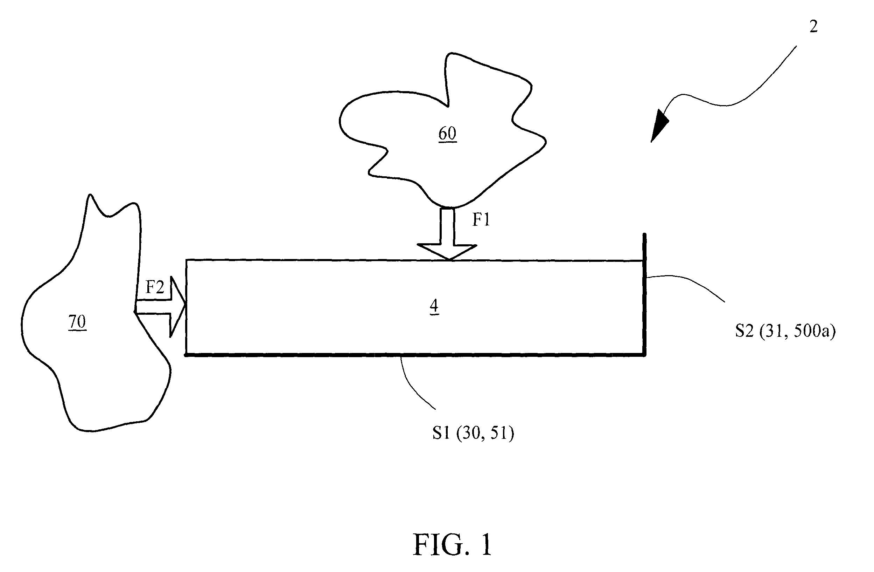

Le principe de l'invention est illustré en Fig. 1. Un dispositif d'écriture et/ou lecture 4 est un polyèdre dont deux faces sont respectivement mises en appui contre deux surfaces de référence S1 (30, 51) et S2 (31, 500a). La surface S1 est de préférence une surface d'appui horizontale et la surface S2 est de préférence une surface d'appui verticale. Selon l'invention, le dispositif d'écriture et/ou lecture est maintenu dans le châssis d'un ordinateur par un dispositif de maintien 2 prévu à la fois pour exercer une fonction de maintien et pour rattraper le jeu prévu entre le dispositif d'écriture et/ou lecture et les parois l'entourant lorsqu'il est introduit dans le châssis. Ce dispositif de maintien 2 comporte au moins un moyen de maintien 60, 70 caractérisé par des propriétés élastiques. Chaque moyen de maintien 60, 70 est réalisé dans un matériau souple, différent de celui utilisé pour le châssis, qui lui confère la possibilité de se déformer lors de l'insertion du dispositif d'écriture et/ou lecture 4 dans le châssis, puis de reprendre sa forme initiale après retrait dudit dispositif d'écriture et/ou lecture 4. Lorsque le dispositif d'écriture et/ou lecture 4 est inséré dans le châssis, chaque moyen de maintien 60, 70 se trouve dans une position active déformée dans laquelle il exerce une force de maintien F1, F2 sur ledit dispositif d'écriture et/ou lecture 4. Le sens de chaque force F1, F2 est représenté sur la Fig. 1 par une flèche. Ainsi, chaque moyen de maintien 60, 70 exerce une force de maintien F1, F2 sur le dispositif d'écriture et/ou lecture 4. Avantageusement, le dispositif de maintien 2 comporte deux moyens de maintien 60 et 70. Le premier moyen de maintien 60 exerce une force de maintien F1 verticale sur le dispositif d'écriture et/ou lecture 4 de manière à amener ledit dispositif d'écriture et/ou lecture 4 à prendre un appui forcé contre la surface de référence S1. Le second moyen de maintien 70 exerce une force de maintien F2 horizontale sur le dispositif d'écriture et/ou lecture 4 de manière à amener ledit dispositif d'écriture et/ou lecture 4 à prendre un appui forcé contre la surface de référence S2. Le degré de liberté restant au dispositif d'écriture et/ou lecture 4 permet son insertion et son retrait du châssis.

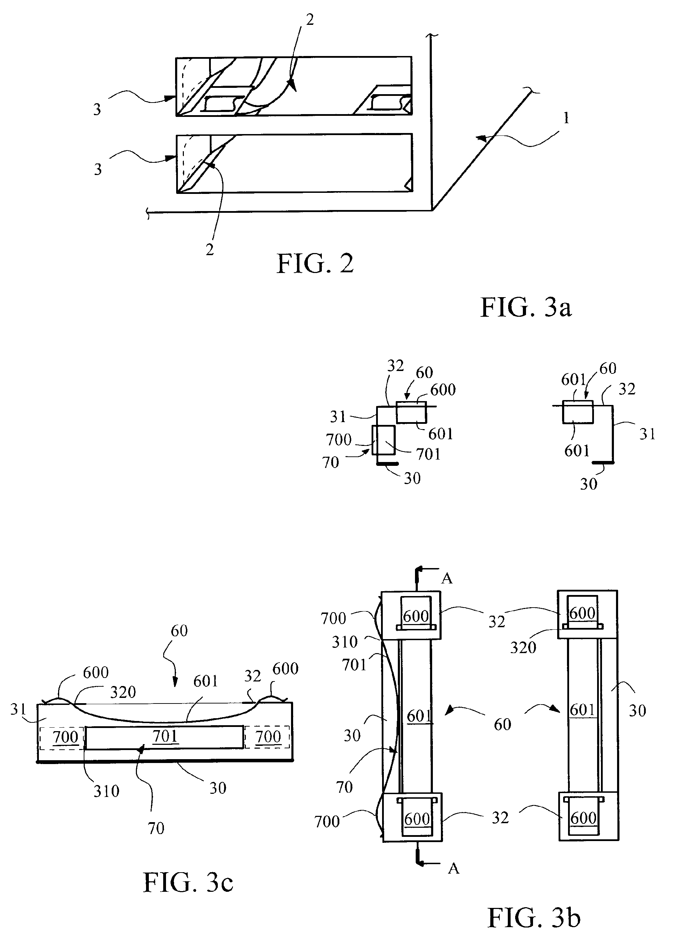

On a représenté à la Fig. 2 un châssis d'ordinateur 1 pourvu du dispositif de maintien 2 selon l'invention. Sur cette Fig., on remarque qu'un châssis 1 peut comporter comme cela est représenté deux logements 3 prévus pour recevoir chacun un dispositif d'écriture et/ou lecture (non représenté) se présentant de manière avantageuse sous une forme de parallélépipède rectangle. Ce dispositif d'écriture et/ou lecture 4 peut être par exemple un disque dur, un lecteur de disquettes, un lecteur de disques optiques tel qu'un disque compact, etc. Toutefois, un dispositif de maintien 2 selon l'invention est avantageusement prévu pour maintenir un disque dur. On notera en outre que chaque logement 3 est indépendant et on comprendra que selon les besoins, le châssis ne peut comporter qu'un seul logement ou au contraire plus de deux logements 3.

Un logement 3 est représenté aux Figs. 3a à 3c. Ce logement 3 comporte deux rebords 30 horizontaux, deux parois verticales 31 liées respectivement à chaque rebord 30 et deux rabats horizontaux liés respectivement à chacune des parois 31. Les parois 31 du logement 3 sont montées dans le châssis 1 avec un écartement prévu pour le passage d'un dispositif d'écriture et/ou lecture 4. Les rebords 30 qui s'étendent sur toute la longueur du logement 3 servent d'appui vertical au dispositif d'écriture et/ou lecture 4, qui peut y reposer. Les rabats 32 se présentent sous la forme de quadrilatères fixés en partie haute des parois 31 du logement 3, un rabat 32 étant de préférence fixé à chaque extrémité d'une paroi 31. Chaque rabat 32 possède une ouverture ou fente 32 prévue pour permettre le passage d'une extrémité 600 d'un moyen de maintien qui est avantageusement un moyen élastique tel qu'une lame 60. Un moyen de maintien pourrait également être un patin pourvu de ressorts ou tout autre moyen équivalent. Ainsi, les rabats 32 situés aux extrémités d'une même paroi 31 sont prévus pour recevoir chacun une extrémité 600 d'une même lame 60. Les extrémités 600 sont recourbées en direction du rabat 32 qui les soutient de manière à assurer un bon appui de la lame 60 sur le rabat 32. Le corps 601 de la lame 60 situé entre les deux rabats 32 est bombé en direction des rebords 30 de manière à exercer une force verticale. Ces lames 60 sont faites dans un matériau différent de celui du châssis. Ce matériau est souple de manière à pouvoir se déformer puis reprendre sa forme d'origine sans subir de déformation persistante. Avantageusement, ces lames sont réalisées en acier inoxydable.

Une autre lame 70 est montée sur une paroi 31 du logement 3. A l'instar des lames 60, les extrémités 700 de la lame 70 sont passées au travers de fentes 310 réalisées dans la paroi 31. Ainsi, les extrémités 700 de la lame 70 sortent du logement, alors que le corps 701 de la lame 70 est à l'intérieur du logement 3. Les extrémités 700 sont recourbées vers la paroi 31 et le corps 701 est bombé vers l'intérieur du logement 3. La lame 70 est destinée à exercer une force horizontale. Cette lame 70 est avantageusement en acier inoxydable.

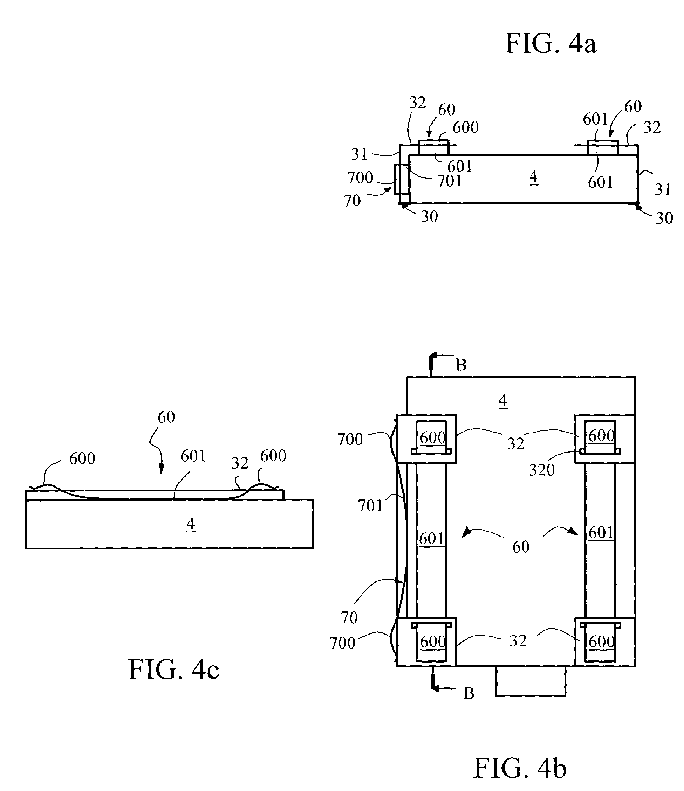

On a représenté aux Figs. 4a à 4c, un dispositif d'écriture et/ou lecture 4 inséré dans le logement 3. Sur ces Figs., on remarque que les lames 60 et 70 n'ont plus la même forme qu'aux Figs. 3a à 3c. En effet, une fois le dispositif d'écriture et/ou lecture 4 inséré dans le logement 3, les corps 601 et 701 des lames 60 et 70 sont respectivement repoussés vers les rabats 32 et la paroi 31 sur lesquels ils sont montés. Dans cette position, les lames 60 exercent une force verticale sur le dispositif d'écriture et/ou lecture 4 et la lame 70 exerce une force horizontale sur le dispositif d'écriture et/ou lecture 4. Ainsi, le dispositif d'écriture et/ou lecture 4 est maintenu dans le logement 3, d'une part, de manière horizontale entre la paroi verticale 31 et la lame 70 et, d'autre part, de manière verticale, entre les rebords horizontaux 30 et les lames 60. Un seul mouvement de translation reste possible pour le dispositif d'écriture et/ou lecture 4 à l'intérieur du logement 3. Ce mouvement est celui qui permet d'introduire ou d'ôter le dispositif d'écriture et/ou lecture 4 du logement 3. Du fait de la présence des lames 60 et 70, ce mouvement de translation nécessite l'application d'une force exercée par l'utilisateur sans laquelle le dispositif d'écriture et/ou lecture 4 ne peut se déplacer. Le dispositif d'écriture et/ou lecture 4 est ainsi plaqué par chaque lame 60 ou 70 contre une surface de référence.

On remarquera que le dispositif d'écriture et/ou lecture 4 comporte sur l'un de ses côtés restés libres un connecteur prévu pour communiquer avec son environnement. Lors de l'insertion du dispositif d'écriture et/ou lecture 4 dans un logement 3, ce connecteur est enfiché dans un connecteur récepteur monté sur le châssis. En permettant un positionnement précis des connecteurs entre eux, le dispositif de maintien selon l'invention réalise ainsi une bonne connexion entre connecteurs.

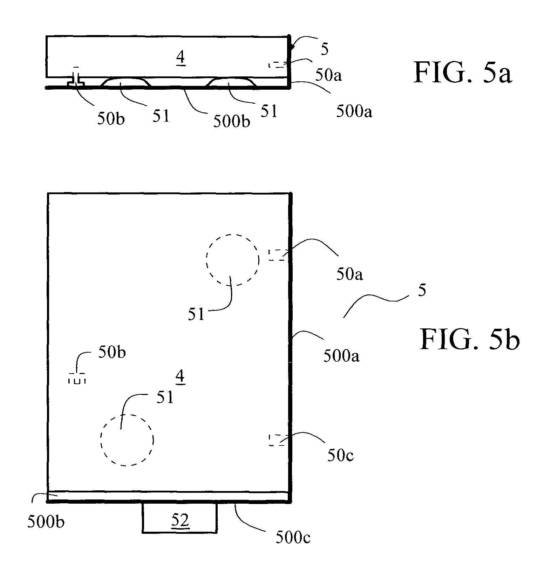

Tout dispositif d'écriture et/ou lecture 4 devant être inséré dans un logement 3 du châssis 1, peut d'abord être installé dans un support 5 de section en L, comme cela est représenté à la Fig. 5a. Ce support 5 peut comporter des ergots 50a, 50b et des plots 51. Dans ce mode de réalisation de l'invention, le support 5 comporte de préférence deux premiers ergots 50a placés sur une paroi verticale 500a et un second ergot 50b placé sur une paroi horizontale 500b. Les premiers ergots 50a sont prévus pour être respectivement insérés dans des ouvertures percées à cet effet dans une paroi verticale du dispositif d'écriture et/ou lecture 4 de façon à positionner le dispositif d'écriture et/ou lecture 4 sur le support 5. Le second ergot 50b est prévu pour être inséré dans une ouverture percée à cet effet dans une paroi horizontale du dispositif d'écriture et/ou lecture 4 de façon à permettre le maintien du dispositif d'écriture et/ou lecture 4 sur le support 5. Une fois le dispositif d'écriture et/ou lecture 4 positionné sur les ergots 50a, 50b, il repose de préférence sur des plots 51 formés dans la paroi horizontale 500b. Comme on peut le remarquer sur la Fig. 5b, le support 5 comporte une autre paroi verticale 500c qui, lorsque le dispositif d'écriture et/ou lecture 4 positionné sur son support 5 est inséré dans un logement 3 du châssis 1, referme l'ouverture du logement 3. Sur cette paroi 500c, est également montée une languette 52 destinée à faciliter le retrait du dispositif d'écriture et/ou lecture 4 du logement 3.

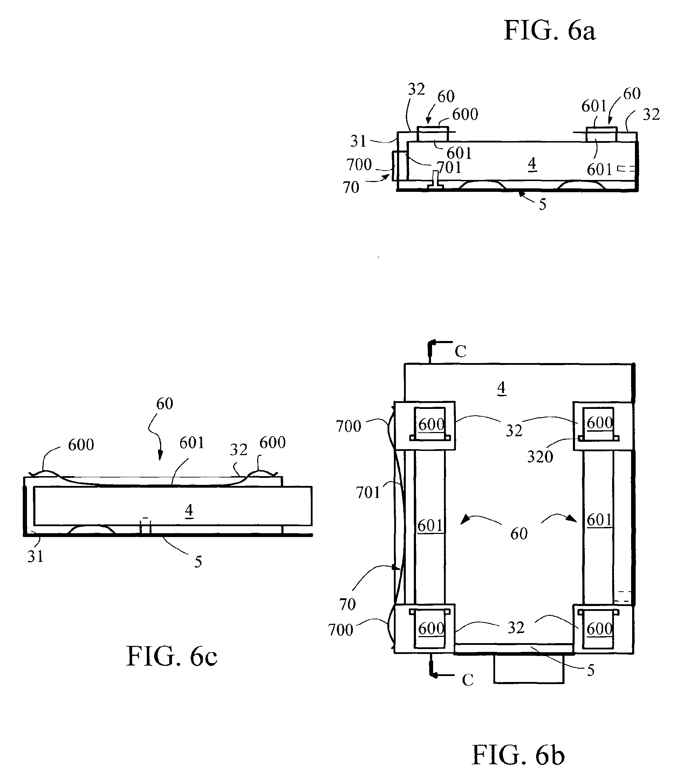

On a représenté aux Figs. 6a à 6c, le dispositif d'écriture et/ou lecture 4 monté dans le support 5 et inséré dans le logement 3. Sur ces Figs., on remarque que c'est le support 5 qui matérialise les surfaces de référence contre lesquelles le dispositif d'écriture et/ou lecture 4 prend appui. En effet, dans cette position, les lames 60 exercent une force verticale sur le dispositif d'écriture et/ou lecture 4 et la lame 70 exerce une force horizontale sur le dispositif d'écriture et/ou lecture 4. Ainsi, le dispositif d'écriture et/ou lecture 4 est maintenu dans le logement 3, d'une part, de manière horizontale entre la paroi verticale 500a du support 5 et la lame 70 et, d'autre part, de manière verticale, entre les plots 51 en surface de la paroi 500b du support 5 et les lames 60. Un seul mouvement de translation reste possible pour le dispositif d'écriture et/ou lecture 4 sur son support 5 à l'intérieur du logement 3. Ce mouvement est celui qui permet d'introduire ou d'ôter le dispositif d'écriture et/ou lecture 4 du logement 3. Du fait de la présence des lames 60 et 70, ce mouvement de translation nécessite l'application d'une force exercée par l'utilisateur sans laquelle le dispositif d'écriture et/ou lecture 4 ne peut se déplacer. Le dispositif d'écriture et/ou lecture 4 est ainsi plaqué par chaque lame 60 ou 70 contre une surface de référence qui est avantageusement, soit une paroi du logement 3, soit des plots 51. Le support 5 tel que décrit précédemment est prévu pour libérer le passage au connecteur dudit dispositif d'écriture et/ou lecture 4. Ainsi, de la même manière que dans le premier mode de réalisation, ce connecteur est enfiché avec précision dans un connecteur récepteur monté sur le châssis lors de la mise en place du dispositif d'écriture et/ou lecture 4 dans le châssis 1.

## Revendications

1. Dispositif de maintien (2) d'un dispositif d'écriture et/ou lecture (4) monté dans un châssis d'ordinateur (1), **caractérisé en ce qu'**il comporte au moins un moyen de maintien (60, 70) distinct du corps dudit châssis (1), ledit ou chaque moyen de maintien (60, 70) possédant des propriétés élastiques lui permettant d'exercer une force destinée à plaquer (F1, F2) ledit dispositif d'écriture et/ou lecture (4) contre au moins une surface de référence (30, 51, 31, 500a) tout en autorisant l'insertion et le retrait du dispositif d'écriture et/ou lecture (4) dudit châssis (1).

2. Dispositif de maintien (2) selon la revendication 1, **caractérisé en ce que** ledit ou chaque moyen (60, 70) est une lame souple.

3. Dispositif de maintien (2) selon l'une des revendications 1 ou 2, **caractérisé en ce qu'**il comporte deux moyens de maintien (60) prévus pour plaquer ledit dispositif d'écriture et/ou lecture (4) contre une première surface de référence (30, 51) et un autre moyen de maintien (70) prévu pour plaquer ledit dispositif d'écriture et/ou lecture (4) contre une seconde surface de référence (31, 500a).

4. Dispositif de maintien selon la revendication 3, **caractérisé en ce que** ladite première surface de référence (30, 51) est formée d'au moins un plot.

5. Dispositif de maintien selon la revendication 3, **caractérisé en ce que** ladite première surface de référence (30, 51) est formée par une paroi.

6. Dispositif de maintien selon l'une des revendications 3 à 5, **caractérisé en ce que** ladite seconde surface de référence (31, 500a) est formée par une paroi.

7. Dispositif de maintien selon l'une quelconque des revendications précédentes, **caractérisé en ce qu'**il comporte en outre un support (5) pourvu d'ergots (50a, 50b) prévus pour limiter le mouvement de translation du dispositif d'écriture et/ou lecture (4) dans la direction dans laquelle il est engagé dans ledit châssis (1).
